# EUROPÄISCHE PATENTANMELDUNG

(11) **EP 2 023 017 A2**
(43) Veröffentlichungstag der Anmeldung: **11.02.2009**
(21) Anmeldenummer: 08010490.4
(22) Anmeldetag: 10.06.2008
(51) Int. Cl.: F16H 59/04

(54) **Elektronisches Schaltsystem mit Ausfallsicherung**

(30) Priorität: 08.08.2007 DE 102007037437
(71) Anmelder: GM Global Technology Operations, Inc., Detroit, MI 48265-3000 (US)
(72) Erfinder: Sporleder, Jan, 67657 Kaiserslautern (DE)
(74) Vertreter: Kraenzmer, Martin

(57) **Zusammenfassung**

Ein Schaltsystem (1) für ein Kraftfahrzeuggetriebe hat eine äußere Schaltung, die einen Schalt-Wählhebel (21) umfasst, eine innere Schaltung, die wenigstens einen Aktuator (31) und ein von dem Aktuator (31) in Abhängigkeit von der Stellung des Schalt-Wählhebels (21) bewegbares Auswahlglied (32) umfasst, und eine spielhaltige Übertragervorrichtung, die ein mechanisch an den Schalt-Wählhebel (21) gekoppeltes Teil (41), ein mechanisch an das Auswahlglied (32) gekoppeltes Teil (42), die mit begrenztem Spiel gegeneinander beweglich sind, und einen Sensor (43) zum Erfassen einer Auslenkung der Teile (41, 42) gegeneinander umfasst. Eine Steuereinrichtung (5) des Aktuators (31) ist eingerichtet, den Aktuator (31) mit einer in Abhängigkeit von der Auslenkung (44) eines der Teile (41, 42) in Bezug auf das andere Teil (41, 42) kontinuierlich variablen Geschwindigkeit zu verstellen.

## Beschreibung

Die vorliegende Erfindung betrifft ein Schaltsystem für ein Kraftfahrzeuggetriebe, insbesondere ein Schaltsystem mit mechanischer Übertragung der Schaltbewegung zwischen äußerer und innerer Schaltung.

Gebräuchliche mechanische Schaltsysteme in Kraftfahrzeugen bringen durch die unmittelbare mechanische Kopplung von Schalthebel und Getriebe gewisse Einschränkungen im Schalt- und Fahrkomfort mit sich, da Vibrationen aus dem Getriebe auf dem Schalthebel übertragen werden, welche vom Fahrer als unangenehm empfunden werden. Zudem werden durch die Vibrationen unangenehme Geräusche im Fahrzeuginneren hervorgerufen. Eine Dämpfung der Vibrationen erfordert konstruktiven Aufwand und führt dennoch häufig nicht zu optimalen Ergebnissen hinsichtlich des Bedienungskomforts.

In modernen Shift-by-Wire Handschaltgetrieben sind Schalthebel und Getriebe mechanisch entkoppelt, indem eine Schaltbewegung der äußeren Schaltung mit Hilfe von Sensoren erfasst wird und elektrische Aktuatoren der inneren Schaltung einen der Schaltbewegung entsprechenden Schaltvorgang im Getriebe antreiben. Durch die Entkopplung gelangen keine Vibrationen mehr aus dem Getriebe zum Schalthebel, so dass der Komfort für einen Fahrer deutlich verbessert ist. Jedoch kann es bei einem solchen Schaltsystem zu Ausfällen in der Elektronik kommen, so dass die Schaltvorgänge nicht mehr an das Getriebe übertragen werden können und somit das Fahrzeug stillsteht.

Moderne Assisted Shift Systeme behalten die mechanische Kopplung zwischen Schaltung und Getriebe bei, der tatsächliche Schaltvorgang wird allerdings von elektrischen Aktuatoren unterstützt, so dass die Kraft, die der Fahrer zum Schalten aufwenden muss, verringert ist. Dies verbessert grundsätzlich den Bedienungskomfort. Bei einem Ausfall des elektrischen Systems kann das Fahrzeug weiterhin manuell geschaltet werden. Jedoch bleiben durch die mechanische Verbindung die oben erwähnten Probleme mit der Übertragung der Vibrationen aus dem Getriebe an den Schalthebel bestehen.

Aus JP 22 48 762 A ist eine Anordnung für ein elektronisch gesteuertes Schaltsystem bekannt, bei welchem ein Schalthebel mit einer inneren Schaltung über ein Schaltkabel mechanisch verbunden ist, ein Sensor eine Bewegung des Schalthebels erfasst und ein elektrisch angetriebener Stellmotor das Schaltkabel die erfasste Bewegung unterstützend antreibt. Hierbei ist zwischen Schalthebel und Schaltkabel eine spielhaltige Übertragervorrichtung eingesetzt, in welcher als der Sensor ein Kontakt fungiert, der bei einer Bewegung des Schalthebels entlang einer Auswahl-Schaltgasse geschlossen wird. Solange die Bewegung des Schalthebels nicht stark genug ist, um den Kontakt zu schließen, erfolgt keine Reaktion des Stellmotors. Die Schließung des Kontakts nach einer ausreichenden Bewegung des Schalthebels veranlasst den an das Schaltkabel gekoppelten Stellmotor dazu, das Schaltkabel in die gewünschte Richtung zu bewegen und somit den Schaltvorgang im Getriebe auszulösen.

Auf den ersten Blick erscheint es wünschenswert, dass bei einer solchen Anordnung der Stellmotor der Schalthebelbewegung schnell folgt. Je schneller der Stellmotor folgt, umso größer ist jedoch die Wahrscheinlichkeit, dass durch die vom Stellmotor angetriebene Bewegung des Schaltkabels der Kontakt wieder öffnet, bevor der Fahrer die Schalthebelbewegung beendet hat. Ein störendes Rütteln des Stellmotors ist die Folge.

Es ist daher die Aufgabe der vorliegenden Erfindung, ein elektrisch gesteuertes, bei einem Ausfall der elektrischen Steuerung funktionsfähig bleibendes Schaltsystem zu schaffen, welches eine genaue, feinfühlige Steuerung der Schaltvorgänge gestattet.

Die Aufgabe wird gelöst, indem in einem Schaltsystem für ein Kraftfahrzeuggetriebe mit einer äußeren Schaltung, die einen Schalt-Wählhebel umfasst, einer inneren Schaltung, die wenigstens einen Aktuator und ein von dem Aktuator in Abhängigkeit von der Stellung des Schalt-Wählhebels bewegbares Auswahlglied umfasst, und einer spielhaltigen Übertragervorrichtung, die ein mechanisch an den Schalt-Wählhebel gekoppeltes Teil, ein mechanisch an das Auswahlglied gekoppeltes Teil, die mit begrenztem Spiel gegeneinander beweglich sind, und einen Sensor zum Erfassen einer Auslenkung der Teile gegeneinander umfasst, eine Steuereinrichtung des Aktuators eingerichtet ist, den Aktuator mit einer in Abhängigkeit von der Auslenkung eines der Teile in Bezug auf das andere Teil kontinuierlich variablen Geschwindigkeit zu verstellen. Die Übertragervorrichtung kann somit die Verbindung zwischen dem Schalt-Wählhebel der äußeren Schaltung und dem Auswahlglied der inneren Schaltung herstellen, welches den Schaltvorgang im Getriebe auslöst. Bei elektronisch gesteuerten Schaltvorgängen kann durch die gegeneinander beweglichen Teile der Übertragervorrichtung und die durch den Sensor detektierte Auslenkung der Teile zueinander die Bewegung des Schalt-Wählhebels durch den Fahrer kontinuierlich und präzise nachgebildet und auf das Auswahlglied übertragen werden. Die kontinuierliche Variabilität der Geschwindigkeit erlaubt, auf eine kleine Auslenkung des Schalt-Wählhebels mit einer langsamen Nachführbewegung des Stellmotors zu reagieren. Eine Ansprechschwelle der Schalthebelbewegung, die bei dem System aus JP 22 48 762 A erforderlich ist, um das System stabil zu halten, kann bei einem System gemäß der vorliegenden Erfindung beliebig klein oder Null sein. So ist eine sehr feinfühlige Steuerung des Schaltvorgangs möglich. Da, solange das Schaltsystem normal arbeitet, keine feste mechanische Verbindung zwischen den gegeneinander beweglichen Teilen der Übertragervorrichtung zustande kommt und da der Aktuator nur auf das getriebeseitige Teil der Übertragervorrichtung wirkt, können eventuell auftretende Vibrationen aus der inneren Schaltung auch nicht auf die äußere Schaltung übertragen werden und können somit gedämpft werden.

Wenn während einer Funktionsstörung oder einem Ausfall des elektrischen Systems der Fahrer die gegeneinander beweglichen Teile der Schalt-Wählhebel bewegt, folgt das an den Schalt-Wählhebel gekoppelte Teil der Übertragervorrichtung, aber das an das Auswahlglied der inneren Schaltung gekoppelte Teil wird nicht nachgeführt. Wenn dabei das an den Schalt-Wählhebel gekoppelte Teil an das Ende seines Spiels stößt, entsteht eine formschlüssige Verbindung, die es erlaubt, die Schaltbewegung dennoch an das Auswahlglied zu übertragen. Somit kann die gewünschte Ausfallsicherheit gewährleistet werden und die Schaltung bleibt auch bei Störungen der elektronischen Steuerung schaltbar.

Hinsichtlich der elektronisch gesteuerten Schaltvorgänge ist es hierbei vorteilhaft, wenn die Steuereinrichtung einen PI-(Proportional-Integral)-Regler umfasst. Da ein solcher Regler es erlaubt, die Nachführgeschwindigkeit flexibel an Ausmaß und Dauer einer Abweichung anzupassen, kann die Steuerung des Aktuators besonders schnell und exakt durchgeführt werden. Der PI-Regler kann, wenn gewünscht, auch einen Zeitableitungsterm berücksichtigen, m.a.W. es kann sich auch um einen PID-Regler handeln.

Bezüglich des Schaltkomforts für einen Fahrer des Kraftfahrzeugs ergeben sich besondere Vorteile, wenn das Schaltsystem eine Kontur und eine gegen die Kontur beaufschlagte und bewegliche Spitze umfasst, wobei von Spitze und Kontur eines an dem Schaltsystem ortsfest und das andere mit dem Schalt-Wählhebel gekoppelt beweglich ist. Die Kontur definiert stabile Stellungen des Schalt-Wählhebels, z.B. in einer Wählgasse oder jeweils an den Enden von von der Schaltgasse abzweigenden Wählgassen.

Insbesondere ist es hinsichtlich des Aufbaus des Schaltsystems vorteilhaft, wenn die Übertragervorrichtung über einen ersten Seilzug an die äußere Schaltung und über einen zweiten Seilzug an die innere Schaltung gekoppelt ist. Somit können äußere und innere Schaltung einschließlich des Getriebes im Vergleich zu bisher gebräuchlichen Shift-by-Wire Lösungen unverändert eingesetzt werden, und nur die Übertragervorrichtung muss als Verbindung zwischen beiden Schaltungen integriert werden.

In einer weiteren vorteilhaften Ausgestaltung des Schaltsystems ist die Übertragervorrichtung an einem Gehäuse des Kraftfahrzeuggetriebes montiert und durch einen Seilzug an die äußere Schaltung gekoppelt. Dadurch können Komponenten eines gebräuchlichen mechanischen Schaltungssystems, insbesondere das Getriebe und die äußere Schaltung unverändert eingesetzt werden, um ein ausfallsicheres elektronisches Shift-by-Wire Schaltsystem zu realisieren.

Weiterhin ist es vorteilhaft, wenn in dem Schaltsystem die Kontur und die Spitze in die äußere Schaltung integriert sind. Somit kann eine verbesserte Schaltgenauigkeit durch ein direktes Feedback der Bewegung des Schalt-Wählhebels an den Fahrer bewirkt werden.

In einer weiteren Ausgestaltung des Schaltsystems ist es ebenfalls vorteilhaft, wenn die Kontur und die Spitze in die Übertragervorrichtung integriert sind. Auf diese Weise kann die von der Schaltbewegung ausgehende Auslenkung von Spitze und Kontur gegeneinander besonders gut mit dem Spiel der beiden zueinander beweglichen Teile der Übertragervorrichtung abgestimmt werden, so dass die Schaltvorgänge zur inneren Schaltung hin sehr exakt umgesetzt werden können.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: eine schematische Darstellung eines Schaltsystems für ein Kraftfahrzeug gemäß der Erfindung in einer ersten Ausführungsform;
- Fig. 2: eine schematische Darstellung einer Variante des Schaltsystems aus Fig. 1;
- Fig. 3: eine schematische Darstellung einer weiteren Ausführungsform der Erfindung; und
- Fig. 4: eine schematische Darstellung einer Variante des Schaltsystems aus Fig. 3.

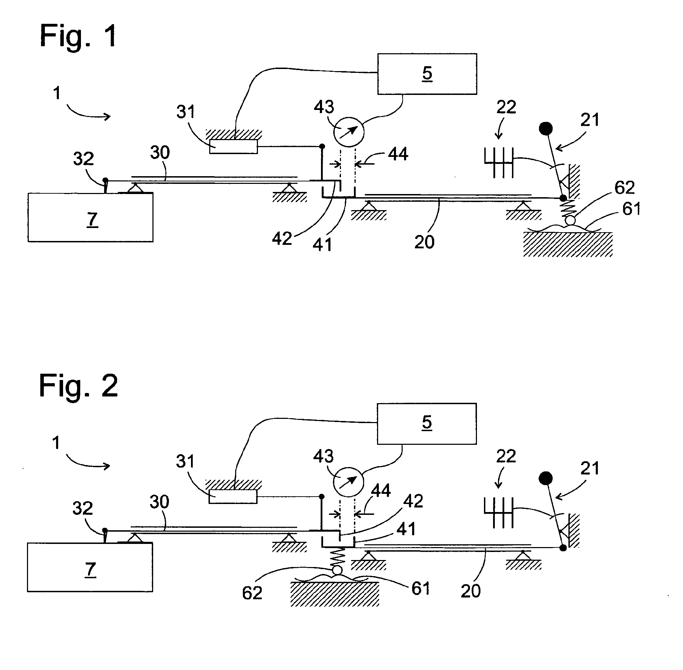

Fig. 1 zeigt eine schematische Darstellung eines Schaltsystems 1 in einer ersten Ausführungsform.

Das Schaltsystem 1 umfasst eine äußere Schaltung mit einem Schalt-Wählhebel 21 und einer Schaltkulisse 22 mit sich H-förmig kreuzenden Schalt-und Wählgassen, durch die sich der Schalt-Wählhebel 21 erstreckt und die Bewegungen des Schalt-Wählhebels 21 in der äußeren Schaltung führen. An einem unteren Ende des Schalt-Wählhebels 21 ist eine Spitze 62 über einen Federmechanismus beweglich gehalten, welche mit einer in einem Schaltgehäuse der äußeren Schaltung fest montierten Kontur 61 zusammenwirkt. Aus dem Zusammenwirken von Spitze 62 und Kontur 61 ergeben sich stabile Stellungen des Schalt-Wählhebels 21 jeweils in der Wählgasse und an den Enden der Schaltgassen, die für den Fahrer erfühlbar sind und im während des Schaltens eine Rückmeldung über die jeweils erreichte Position des des Schalt-Wählhebels 21 liefern.

Weiter umfasst das Schaltsystem 1 eine innere Schaltung mit einem Aktuator 31 und einem Auswahlglied 32, wobei das Auswahlglied 32 dazu dient, einen Gang in einem Getriebe 7 zu schalten, und der Aktuator 31 ein elektrisch angetriebener Motor ist, welcher das Auswahlglied 32 in eine vorbestimmte Position bewegt.

Äußere und innere Schaltung sind durch eine Übertragervorrichtung beweglich verbunden, welche zwei gegeneinander bewegliche Teile 41, 42 umfasst. Das erste Teil 41 ist über einen ersten Seilzug 20 an den Schalt-Wählhebel 21 der äußeren Schaltung gekoppelt. Das zweite Teil 42 ist über einen zweiten Seilzug 30 an das Auswahlglied 32 der inneren Schaltung gekoppelt. Das erste Teil 41 besitzt eine nach oben geöffnete becher- oder klammerförmige Gestalt, in welches ein unteres Ende des zweiten Teils 42 wie ein Finger von oben eingreift. Der Finger ist von den Wänden des Bechers leicht beabstandet, so dass die Teile 41 und 42 gegeneinander ein gewisses Spiel besitzen.

Der Spielraum zwischen dem Finger und den Wänden kann leer sein; in diesem Fall wird die zum Betätigen des Auswahlgliedes 32 erforderliche Kraft, solange das Schaltsystem normal funktioniert, ausschließlich von dem Aktuator 31 aufgebracht. Der Spielraum kann aber auch einen elastischen Puffer enthalten, der im Falle einer Auslenkung der Teile 41, 42 gegeneinander verformt wird. In diesem Fall spürt der Fahrer die vom Puffer erzeugte Rückstellkraft, sie gibt ihm Aufschluss darüber, wie weit die Bewegung des Teils 41 hinter der des Teils 42 hinterher hinkt.

Die Übertragervorrichtung umfasst weiter einen Sensor 43, welcher den Abstand 44 des Fingers des Teils 42 von einer Wand des Teils 41 erfasst.

Eine Steuereinheit 5 ist über einen Eingang an den Sensor 43 zum Empfang der Abstands 44 angeschlossen und ist über einen Ausgang mit dem Aktuator 31 zum Übertragen einer Stellgröße verbunden.

Wählt nun ein Fahrer in einem elektronisch gesteuerten Schaltbetrieb durch eine Bewegung des Schalt-Wählhebels 21 einen bestimmten Gang aus, so wird diese Bewegung über den Seilzug 20 an das erste Teil 41 der Übertragervorrichtung übertragen. Der daraus resultierende Abstand 44 wird von dem Sensor quantitativ erfasst und an die Steuereinheit 5 übertragen. Ein PID-Regler (nicht dargestellt) der Steuereinheit 5 ermittelt eine Abweichung dieses Abstandes 44 von einem Sollwert (der z.B. einer mittigen Stellung des Fingers im Becher entspricht) und bestimmt daraus eine Geschwindigkeit und Richtung und überträgt diese als Stellgröße an den Aktuator 31. Der Aktuator 31 treibt so eine Bewegung des Auswahlgliedes 32 an, welche die Bewegung des Schalt-Wählhebels 21 exakt nachbildet, so dass das Auswahlglied 32 im Getriebe 7 das Einlegen des gewünschten Ganges bewirkt. Das über den Seilzug 30 mit dem Auswahlglied 32 verbundene zweite Teil 42 wird dabei mit bewegt, so dass die Verstellung des Auswahlgliedes 32 gleichzeitig eine Annäherung des Abstandes 44 an den Sollwert bewirkt.

Im elektronisch gesteuerten Schaltbetrieb wird die Stellgröße durch die Steuereinheit 5 so ermittelt, dass sich der Finger des zweiten Teils 42 immer mittig im Becher des ersten Teils 41 befindet, so dass sich erstes und zweites Teil 41 und 42 auch während der durch die Schaltvorgänge bedingten Bewegungen möglichst wenig berühren und so die äußere von der inneren Schaltung mechanisch entkoppelt ist.

Im elektrischen Teil des Schaltsystems 1 können Störungen auftreten. Diese können durch einen kompletten Stromausfall bedingt sein oder dadurch, dass die elektronische Regelung durch die Steuereinheit 5 zusammen mit dem Aktuator 31 aufgrund situationsabhängiger Bedingungen nicht rasch genug auf Schaltbewegungen reagiert. In solchen Fällen wird die Auslenkung der Teile 41, 42 gegeneinander so groß, dass sie fest gegeneinander drücken und die zum Antreiben der Bewegung des aus Auswahlgliedes 32 erforderliche Kraft vom Fahrer aufgebracht und über die Übertragervorrichtung 4 und die Seilzüge 20, 30 hinweg auf das Auswahlglied 32 ausgeübt wird.

In Fig. 2 ist eine Variante des Schaltsystems 1 aus Fig. 1 schematisch dargestellt, bei welcher die Kontur 61 und die Spitze 62 nicht an der äußeren Schaltung angeordnet sind, sondern einen Bestandteil der Übertragervorrichtung 4 bilden. Hierbei ist die Spitze 62 über einen Federmechanismus beweglich mit dem ersten Teil 41 der Übertragervorrichtung verbunden, so dass die Bewegungen des ersten Teils 41 über die Spitze 62 auf die darunter gelagerte Kontur 61 übertragen werden. Dadurch wird zwar das Feedback der Schaltbewegung am Schalt-Wählhebel 21 graduell vermindert, jedoch ergeben sich bei dieser Anordnung bauliche Vorteile innerhalb des Schaltsystems, da sowohl der Schalthebel 21 als auch das Getriebe 7 nicht erfindungsspezifisch angepasst sein müssen und folglich preiswerte, in großen Stückzahlen verfügbare Komponenten eingesetzt werden können.

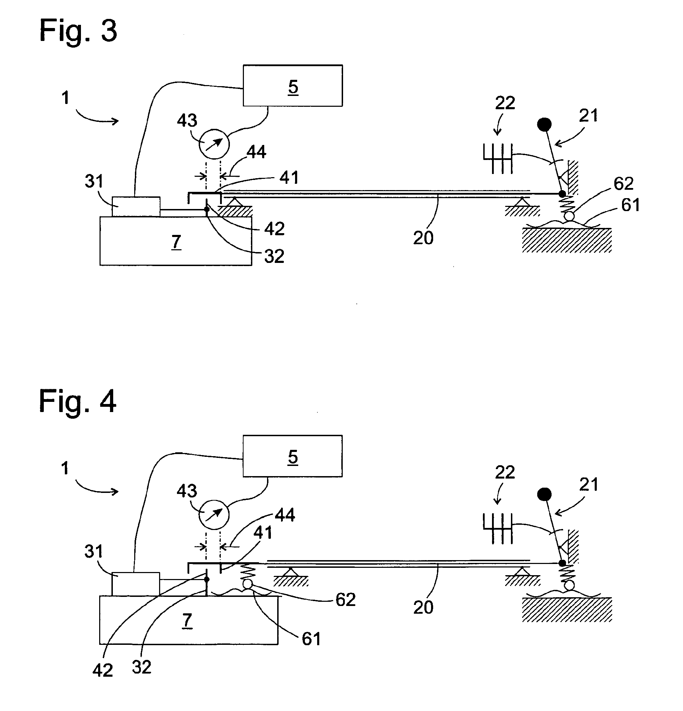

Fig. 3 zeigt eine weitere Ausführungsform des Schaltsystems 1, bei welchem die Übertragervorrichtung und auch der Aktuator 31 an einem Gehäuse des Getriebes 7 montiert ist.

Hierbei ist das Auswahlglied 32 an seiner dem Getriebe 7 abgewandten Ende nach oben hin verlängert, wobei die Verlängerung den Finger des zweiten Teils 42 der Übertragervorrichtung bildet. Das becherförmige erste Teil 41 ist in dieser Anordnung nach unten geöffnet, und der Finger des zweiten Teils 42 ragt von unten in das erste Teil 41 hinein.

Bei dieser Anordnung ist nur ein Seilzug 20 zur Verbindung des ersten Teils 41 mit dem Schalt-Wählhebel 21 der äußeren Schaltung erforderlich.

Die Kontur 61 und die Spitze 62 zur Unterstützung der Schaltbewegung bilden bei dieser Anordnung wiederum einen Bestandteil der äußeren Schaltung, wobei die Spitze 62 mit dem Schalt-Wählhebel 21 beweglich verbunden ist.

Als Alternative hierzu ist in der Darstellung in Fig. 4 die Anordnung von Kontur 61 und Spitze 62 als Bestandteil der Übertragervorrichtung gezeigt. Hierbei ist das erste Teil 41 der Übertragervorrichtung in Richtung des Seilzugs 20 etwas verlängert, so dass mehr Raum geschaffen wird, um die Spitze 62 über ihren Federmechanismus mit dem ersten Teil 41 zu verbinden. Die Anordnung der Kontur 61 am Getriebe 7 ermöglicht es, dessen Position sehr exakt an die Schaltpositionen des Getriebes anzupassen und anschließend das Getriebe 7 als eine Einheit zusammen mit der Kontur 61 in einem Fahrzeug einzubauen.

### Bezugszeichenliste

Schaltsystem 1
äußere Schaltung 2
erster Seilzug 20
Schalt-Wählhebel 21
Schalt-Kulisse 22
innere Schaltung 3
zweiter Seilzug 30
Aktuator 31
Auswahlglied 32
Übertragervorrichtung 4
an Schalt-Wählhebel gekoppeltes Teil 41
an Auswahlglied gekoppeltes Teil 42
Sensor 43
Auslenkung 44
Steuereinrichtung 5
Kontur 61
bewegliche Spitze 62
Getriebe 7

## Patentansprüche

1. Schaltsystem (1) für ein Kraftfahrzeuggetriebe, mit einer äußeren Schaltung, die einen Schalt-Wählhebel (21) umfasst, einer inneren Schaltung, die wenigstens einen Aktuator (31) und ein von dem Aktuator (31) in Abhängigkeit von der Stellung des Schalt-Wählhebels (21) bewegbares Auswahlglied (32) umfasst, und einer spielhaltigen Übertragervorrichtung, die ein mechanisch an den Schalt-Wählhebel (21) gekoppeltes Teil (41), ein mechanisch an das Auswahlglied (32) gekoppeltes Teil (42), die mit begrenztem Spiel gegeneinander beweglich sind, und einen Sensor (43) zum Erfassen einer Auslenkung (44) der Teile (41, 42) gegeneinander umfasst, **dadurch gekennzeichnet, dass** eine Steuereinrichtung (5) des Aktuators (31) eingerichtet ist, den Aktuator (31) mit einer in Abhängigkeit von der Auslenkung (44) eines der Teile (41, 42) in Bezug auf das andere Teil (41, 42) kontinuierlich variablen Geschwindigkeit zu verstellen.

2. Schaltsystem nach Anspruch 1, **dadurch gekennzeichnet, dass** die Steuereinrichtung (5) einen PI-Regler umfasst.

3. Schaltsystem nach Anspruch 1 oder 2, **dadurch gekennzeichnet, dass** es eine Kontur (61) und eine gegen die Kontur beaufschlagte und bewegliche Spitze (62) umfasst, wobei von Spitze (62) und Kontur (61) eines an dem Schaltsystem (1) ortsfest und das andere mit dem Schalt-Wählhebel (21) gekoppelt beweglich ist.

4. Schaltsystem nach einem der vorhergehenden Ansprüche, **dadurch gekennzeichnet, dass** die Übertragervorrichtung über einen ersten Seilzug (20) an die äußere Schaltung und über einen zweiten Seilzug (30) an die innere Schaltung gekoppelt ist.

5. Schaltsystem nach einem der Ansprüche 1 bis 3, **dadurch gekennzeichnet, dass** die Übertragervorrichtung an einem Gehäuse des Kraftfahrzeuggetriebes (7) montiert ist und durch einen Seilzug (20) an die äußere Schaltung gekoppelt ist.

6. Schaltsystem nach Anspruch 3 und Anspruch 4 oder nach Anspruch 5, **dadurch gekennzeichnet, dass** die Kontur (61) und die Spitze (62) in die äußere Schaltung integriert sind.

7. Schaltsystem nach Anspruch 3 und Anspruch 4 oder nach Anspruch 5, **dadurch gekennzeichnet, dass** die Kontur (61) und die Spitze (62) in die Übertragervorrichtung integriert sind.
